# EUROPEAN PATENT APPLICATION

(11) **EP 4 679 067 A1**
(43) Date of publication of application: **14.01.2026**
(21) Application number: 25188939.0
(22) Date of filing: 11.07.2025
(51) Int. Cl.: G01N 23/046, G21K 7/00, G06T 11/00

(54) **CONTINUOUS-MOTION TOMOGRAPHIES WITH IMPROVED IMAGE QUALITY**

(30) Priority: 11.07.2024 US 202463669875 P
(71) Applicant: Carl Zeiss X-Ray Microscopy, Inc., Dublin, California 94568 (US)
(72) Inventor: Chang, Hauyee, Dublin, CA, 94568 (US); Krampert, Gerhard, Dublin, CA, 94568 (US); Smyth, Brian, Dublin, CA, 94568 (US); Yang, Faguo, Dublin, CA, 94568 (US)
(74) Representative: Gulde & Partner

(57) **Abstract**

A method and system for scanning a sample to minimize effects of aberrant detector pixels and fixed imperfections in the imaging path in X-ray microscopy. The method involves moving, i.e., dithering, the sample perpendicular to the X-ray beamline between the source and the detector while capturing projections of the sample, possibly in a continuous fashion. Projection parameters associated with the sample movement, including non-ideal movement of the sample toward and away from the detector, are calculated based on the exact or average position at the time of exposure/trigger. The projections are compensated for the non-ideal movement by changing the geometry description. View angles can be re-estimated and the projections are sorted according to view angle instead of acquisition order. Finally, the reconstruction of the sorted projections is performed using varying magnification reconstruction methods to compensate for the slightly changed geometric magnification.

## Description

### FIELD OF THE DISCLOSURE

The disclosure pertains to the field of X-ray microscopy and X-ray tomography. X-ray microscopy is an imaging technique that allows for the visualization of a sample's internal structure without the need for destructive sectioning. It uses X-rays to create high-resolution images or projections of the sample. Such images can be used to study a wide range of materials, from biological tissues to geological samples and man-made materials, at a much higher resolution than is achievable with traditional light microscopy, if required.

### TECHNOLOGICAL BACKGROUND

This application claims priority from U.S. Provisional Application No. 63/669,875, filed on July 11, 2024.

In an X-ray microscope, the sample is illuminated with an X-ray beam, and the transmitted X-rays are captured to form the projection. The X-ray beam is often produced by a synchrotron radiation source or a laboratory X-ray source. The beam is then conditioned to suppress unwanted energies or wavelengths of radiation to ensure high-quality imaging in many cases. As the X-ray beam passes through the sample, its intensity is modulated according to the sample's internal structure and composition. This modulated beam is then detected by a detector system, which converts the X-rays into an image that can be analyzed.

Tomographic reconstruction transforms the collected X-ray projections into a three-dimensional representation of the sample. The reconstruction process involves mathematical algorithms. The most commonly used reconstruction algorithms fall into a class of reconstruction techniques termed analytical reconstruction. The objective is to find a closed-form solution to the problem of reconstructing an object's internal structure from its projections. The most common analytical method is filtered back projection (FBP). The projections are first processed using a high-pass filter, usually a ramp filter, in the frequency or space domain. Then, each filtered projection is "smeared" back onto the imaging plane as if each data point emits back uniformly in the shape of the original beam. These back projections from all angles are summed up to produce the reconstructed volume, which approximates the object's internal structure. The filtering and back projection operations collectively help in obtaining a more accurate and less blurred reconstruction of the original object. One type of filtered back projection is FDK algorithm. It is used often with X-ray micro tomography systems since it reduces artifacts associated with the typical cone-shaped beam. See Feldkamp, L.A., Davis, L.C. and Kress, J.W. (1984) Practical Cone-Beam Algorithm. Journal of the Optical Society of America A, 1, 612-619.

Continuous motion tomography X-ray microscopy is a technique used to acquire projections while the sample is in constant motion. This differs from traditional "step-and-shoot" methods, where the sample is moved to a specific angle, held stationary while a projection is taken, and then moved again. In contrast, instead of stopping at each angle, the sample continuously rotates during the continuous motion tomography imaging process. This method is typically faster than traditional step-and-shoot tomography because there is no need to stop for each image capture. In addition, it can potentially offer higher resolution and fewer motion artifacts, as the continuous movement can help in averaging out random fluctuations. Continuous motion tomography is part of a broader trend in X-ray imaging towards faster, more dynamic imaging capabilities that can provide more detailed and timely insights into the microscopic properties of materials and biological specimens.

### GENERAL DESCRIPTION

Despite its advantages, X-ray microscopy presents challenges that must be overcome to obtain high-quality images. One such challenge is the presence of imperfections such as aberrant detector pixels and other imperfections such as variations in the source illumination in the imaging path (or due to imperfections in the sample), which can lead to artifacts in the final image. These problems will generally produce ring artifacts during reconstruction.

The present disclosure concerns dithering the sample during scanning to minimize the effects of aberrant pixels in the detector subsystem and other fixed imperfections in the imaging path. Dithering during continuous motion scans can be used to reduce or eliminate projection overhead associated with motion and detector acquisition while keeping or improving image quality compared to step-and-shoot tomographies. The dithering ensures that the same region on the sample does not trace a cylinder during imaging, which can cause circles (rings) to show up in the reconstructed results due to imperfections such as aberrant detector pixels / other imperfections in the imaging path.

In other words, "dithering" (or spatial dithering) here refers to modulating a spatial position of the sample under scan in the imaging path of the X-ray microscopy system. Preferably, the dithering is performed by moving at least one stage or sample holder configured for moving (translating) the sample in the imaging path in orthogonal (to each other and the X-ray beam line) first, second and third directions (x, y, z) while the sample is rotating in the imaging path (in other words, while the sample undergoes angular motion/is revolving/turning/spinning/gyrating). For the purposes of this disclosure, the second direction (y) is defined as being perpendicular to a top surface of an object stage subsystem of the X-ray microscopy system, and sample rotations occur about an axis along the y-direction (the y-axis) of the X-ray microscopy system.

The challenge is made more complex by the fact that the sample's movement during scanning can cause non-ideal shifts (non-ideal position shifts) that can affect the final image quality. This is otherwise known as non-ideal movement. An example of a non-ideal shift is when a movement is not well-controlled enough to be only moving perpendicular to the beam line (X-ray beam). In this scenario, the geometry for reconstruction becomes more complicated. Another example of a non-ideal shift is when the sample under scan is moved away from its eucentric point from the beam axis or when it is moved away from a fixed position between the source and the detector. In some embodiments, non-ideal movement may be a result of (actively) dithering the sample. In some embodiments, non-ideal movement may be a result of a movement of the sample that is incidental to its continuous movement (which may include rotation and/or dithering) during exposure periods. In some embodiments, dithering may include a movement necessary to address the above-mentioned image reconstruction artefacts. In some embodiments, dithering, i.e., (continuously) moving the sample along a direction perpendicular to a propagation direction of an X-ray beam, may include a movement of the sample that is incidental to its continuous movement and/or to the non-ideal movement during exposure periods. In some embodiments, a controller (control unit) may be provided, which is configured for (actively) dithering the sample based on control signals. In some embodiments, (some of) the projection parameters may be determined/measured (e.g. by using an optical method involving imaging and/or photometry), the projection parameters being associated with (continuously) moving the sample along a direction perpendicular to the propagation direction of the X-ray beam.

In general, according to one aspect, the disclosure features a method for scanning a sample to minimize effects of aberrant detector pixels and fixed imperfections in the imaging path. The method comprises moving, e.g., dithering, the sample perpendicular to the X-ray beamline between the source and the detector while capturing projections of the sample. These movements reduce effects of any imperfections such as aberrant detector pixels and/or other imperfections (such as variations in source intensity) in the imaging path. The method further includes calculating projection parameters associated with the sample movement including non-ideal movement of sample toward and away from the detector. The projections are stored along with the projection parameters and compensated for the non-ideal movement by changing the geometry description. Then reconstruction of the projections is performed using varying magnification reconstruction methods to compensate the changed geometric descriptions.

In other words, a method for scanning a sample to minimize effects of imperfections in an imaging path of an X-ray microscopy system is disclosed, the method comprising: moving the sample perpendicular to an X-ray beamline between a source and a detector of the X-ray microscopy system while capturing projections of the sample; calculating projection parameters associated with the sample movement including non-ideal movement of sample toward and away from the detector; storing the projections along with the projection parameters; compensating the projections for the non-ideal movement by changing the geometry description computationally; and performing reconstruction of the projections using the above calculated projection parameters in varying magnification reconstruction methods to compensate for the changed geometric descriptions with the sample movement minimizing artifacts associated with the imperfections.

In other words, a method for scanning a sample in an X-ray microscopy system to minimize effects of imperfections in the sample on image reconstruction is disclosed, the method comprising: moving (dithering) the sample along a direction perpendicular to a propagation direction of an X-ray beam between a source and a detector of the X-ray microscopy system; capturing projections of the sample with the detector while the sample is being moved (dithered); obtaining projection parameters associated with the moving (dithering) of the sample; storing the projections along with the projection parameters; and performing the image reconstruction of the projections using the obtained projection parameters.

This depends on the implementation of the reconstruction method, while some methods do not allow changing geometry from projection to projection, the present approach compensates for the geometry changes. This can be achieved by changing a geometric description of the sample computationally. This is advantageous in terms of reconstruction accuracy, as the method is able to adapt the reconstruction for any changes in the geometric description of the sample relative to the source and/or detector. The geometric (geometry) description in the context of the XRM system may include the geometry of the sample and/or a geometric description of the imaging path, e.g., source-to-sample distance, sample-to-detector distance,

In some examples, the sample is continuously moved perpendicular (normal; orthogonal) to the X-ray beam (X-ray beam line; a propagation direction of the X-ray beam) (while) using a free running detection based on a trigger. In other words, the sample is dithered while using a free running detection based on a trigger. The projection parameters can be calculated based on the exact or average position (of the sample) at the time of exposure/the trigger. The exposure refers to the act of performing the scan. In other words, the trigger defines a start point and an end point for the exposure. In some embodiments, the trigger may be based on a predetermined period and/or an angular threshold reached by the sample during the scan. In some embodiments, the trigger may be manually activated by a user of the X-ray microscopy system on a computer system (computer), which may have advantages for the usability of the system. In some embodiments, the trigger may be generated by the computer system (computer). In some embodiments, the projection parameters may include the (exact or average) positions of the x, y, z stages of the compound stage and the theta stage. In some embodiments, the projection parameters may include a view angle, a magnification/an effective magnification, an angle between the detector normal and the z-axis, and/or a source vector.

In other words, the projection parameters may comprise positions of the 3-axis compound stage and the theta stage at the time of the trigger. These positions may be obtained and/or calculated based on the exact or average positions of the stages and/or the sample.

The method may further include continuously rotating the sample about an axis perpendicular to a top surface of an object stage subsystem of the X-ray microscopy system, wherein the rotating is performed by a theta stage (rotational stage), the moving (dithering) is performed by a 3-axis compound stage (x-, y- and z-stage), and the object stage subsystem comprises both the theta stage and the 3-axis compound stage.

The method may further include re-estimating view angles in the sample coordinate system and then sorting the projections according to the estimated view angle instead of acquisition order. Advantageously, the views are then weighted to vary the contribution to the final reconstructed volume to accommodate variations in the effective angular density. In other words, the method may further include re-estimating view angles and sorting the projections within scan data according to the view angle.

The method may further include compensating the projections for a non-ideal movement of the sample upon moving the sample along a direction perpendicular to a propagation direction of an X-ray beam (dithering) by changing a geometric description; performing the image reconstruction by applying a varying magnification reconstruction method to compensate for the changed geometric description. In other words, the method may further include compensating the projections for the non-ideal movement by changing the geometry description computationally and performing reconstruction of the projections using the above calculated parameters. The non-ideal movement may comprise a movement of the sample towards or away from the detector upon moving the sample along a direction perpendicular to a propagation direction of an X-ray beam (during dithering).

The method may include adaptively weighting the view angles to accommodate variations in an effective angular density of the projections. In other words, the method may further include adapting the weighting of the views to accommodate variations in the effective angular density.

The sample is moved by controlling an x-stage and z-stage along with a y-stage for dithering in a direction perpendicular to the X-ray beam (X-ray beam line). In other words, the sample is moved (dithered) by controlling an x-stage and a z-stage and a y-stage for dithering in a direction perpendicular to the propagation direction of the X-ray beam. The 3-axis compound stage includes the x-stage and the y-stage and the z-stage.

In general, according to another aspect, the disclosure features an X-ray Microscopy (XRM) system, comprising an X-ray microscope and a computer, wherein the X-ray microscope includes an X-ray source subsystem, object stage subsystem, and a detector subsystem, wherein the computer executes a scanning control application and a reconstruction application for executing above-described method. In other words, the computer of the XRM system is configured for executing the scanning control application and the reconstruction application for carrying out the method of the present disclosure.

The above and other features of the disclosure including various novel details of construction and combinations of parts, and other advantages, will now be more particularly described with reference to the accompanying drawings and pointed out in the claims. It will be understood that the particular method and device embodying the invention are shown by way of illustration and not as a limitation of the disclosure. The principles and features of this disclosure may be employed in various and numerous embodiments without departing from the scope of the disclosure.

### BRIEF DESCRIPTION OF THE DRAWINGS

In the accompanying drawings, reference characters refer to the same parts throughout the different views. The drawings are not necessarily to scale; emphasis has instead been placed upon illustrating the principles of the disclosure. Of the drawings:
Fig. 1 is a schematic diagram of an X-ray Microscopy (XRM) system, including an X-ray microscope, a computer, and several subsystems such as an X-ray source subsystem, an object stage subsystem, a detector subsystem, and a stable platform or base;
Fig. 2 is a flow diagram showing a method for controlling dithering of the sample during a scan to minimize effects of fixed defects in an imaging path;
Figs. 3A, 3B, and 3C illustrate non-ideal movements of a sample due to dithering, showing how different control of x-stage and y-stage is required to dither the sample perpendicular to the line between the source subsystem and the detector subsystem; and
Figs. 4A and 4B show the changes in the view angle with dithering. Fig. 4A illustrates an estimation of the view angle without dithering, and Fig. 4B shows how the view angle changes with dithering.

### DETAILED DESCRIPTION OF THE DRAWINGS

The invention now will be described more fully hereinafter with reference to the accompanying drawings, in which illustrative embodiments of the invention are shown. This invention may, however, be embodied in many different forms and should not be construed as limited to the embodiments set forth herein; rather, these embodiments are provided so that this disclosure will be thorough and complete, and will fully convey the scope of the disclosure to those skilled in the art.

As used herein, the term "and/or" includes any and all combinations of one or more of the associated listed items. Also, all conjunctions used are to be understood in the most inclusive sense possible. Thus, the word "or" should be understood as having the definition of a logical "or" rather than that of a logical "exclusive or" unless the context clearly necessitates otherwise. Further, the singular forms and the articles "a", "an" and "the" are intended to include the plural forms as well, unless expressly stated otherwise. It will be further understood that the terms: includes, comprises, including and/or comprising, when used in this specification, specify the presence of stated features, integers, steps, operations, elements, and/or components, but do not preclude the presence or addition of one or more other features, integers, steps, operations, elements, components, and/or groups thereof. Further, it will be understood that when an element, including component or subsystem, is referred to and/or shown as being connected or coupled to another element, it can be directly connected or coupled to the other element or intervening elements may be present.

It will be understood that although terms such as "first" and "second" are used herein to describe various elements, these elements should not be limited by these terms. These terms are only used to distinguish one element from another element. Thus, an element discussed below could be termed a second element, and similarly, a second element may be termed a first element without departing from the teachings of the present disclosure.

Unless otherwise defined, all terms (including technical and scientific terms) used herein have the same meaning as commonly understood by one of ordinary skill in the art to which this disclosure belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

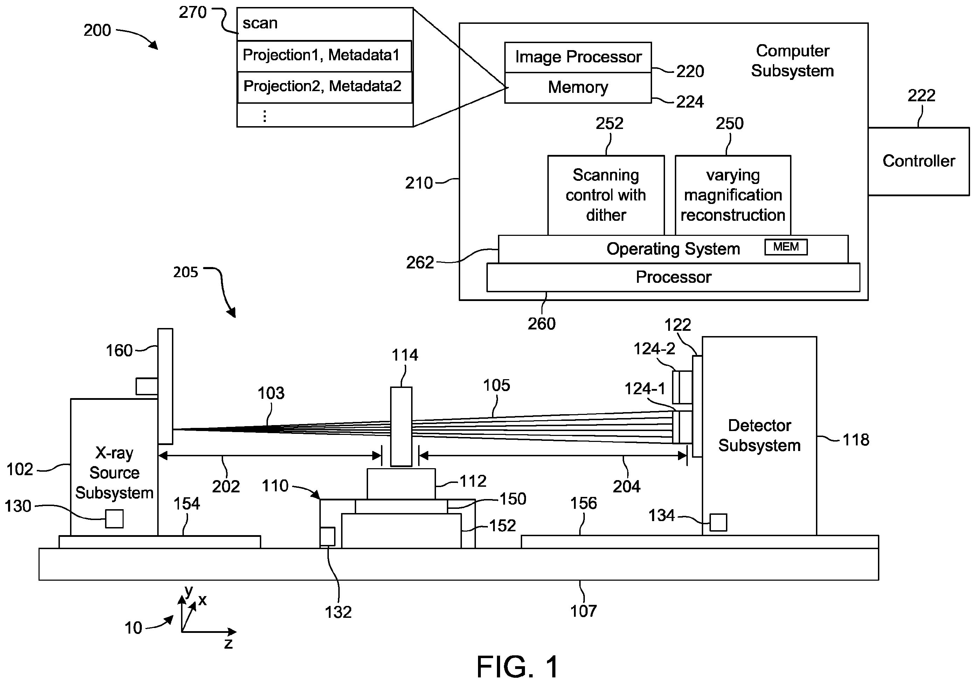

Fig. 1 is a schematic diagram of X-ray Microscopy (XRM) system 200 to which the present disclosure is applicable.

The XRM system 200 includes an X-ray microscope (X-ray CT system) 205 and a computer (computer subsystem) 210.

The illustrated X-ray microscope 205 is an X-ray CT system and includes several subsystems. An X-ray source subsystem 102 generates a polychromatic or a monochromatic X-ray beam 103. An object stage subsystem 110 with object holder 112 holds a sample or object 114 in the beam and positions and repositions it to enable scanning of the sample 114 in the stationary beam 103, 105. A detector subsystem 118 detects the beam 105 after it has been modulated by the sample. A base, such as a platform or optics table 107, provides a stable foundation for the microscopy system 200 and its subsystems.

The object stage subsystem 110 has the ability to position and rotate the sample 114 in the beam 103. Thus, the object stage subsystem 110 will typically include compound linear and rotation stages. The illustrated example has a precision 3-axis compound stage 150 that translates and positions the sample along the x, y, and z axes, very precisely but only over small ranges of travel relative to the size of the system 200. This allows a region of interest of the object 114 to be located within the beam 103/105. In some embodiments, the (unmodulated) beam 103 has a lower divergence (is more collimated) than the modulated beam 105 after the modulated beam 105 passes through the sample 114. In some embodiments, the modulated beam 105 acquires a phase shift after passing through the sample 114. In some embodiments, a propagation direction of the beam 103, 105 is defined as a straight-line direction from source 102 to detector 118. Thus, any direction perpendicular (orthogonal) to the beam 103, 105 is defined with respect to the propagation direction of the beam 103, 105 between the source 102 and the detector 118; rather than with respect to a specific path traced out by individual light rays in the beam 103 or the modulated beam 105.

The 3-axis compound stage 150 is mounted on a theta stage (rotational stage) 152 that rotates the 3-axis compound stage 150 and thus sample 114 in the beam around the y-axis. The theta stage 152 is in turn mounted on the base 107. Thus, with this arrangement, the frame of reference or coordinate system of the 3-axis compound stage 150 is related to the frame of reference or coordinate system 10 of the microscopy system 200 by the current angular position of the theta stage 152.

The source subsystem 102 will typically be either a synchrotron X-ray radiation source or alternatively a "laboratory X-ray source" in some embodiments.

As used herein, a "laboratory X-ray source" is any suitable source of X-rays that is not a synchrotron X-ray radiation source. Laboratory X-ray source 102 can be an X-ray tube, in which electrons are accelerated in a vacuum by an electric field and shot into a target piece of metal, with X-rays being emitted as the electrons decelerate in the metal. Typically, such sources produce a continuous spectrum of background X-rays combined with sharp peaks in intensity at certain energies that derive from the characteristic lines of the selected target, depending on the type of metal target used.

In one example, source subsystem 102 is a rotating anode type or microfocused source, with a tungsten target. Targets that include molybdenum, gold, platinum, silver or copper also can be employed. Preferably a transmission target configuration is used in which the electron beam strikes the thin target from its backside. The X-rays emitted from the other side of the target are used as the beam 103.

The X-ray beam generated by source subsystem 102 is often conditioned to suppress unwanted energies or wavelengths of radiation. For example, undesired wavelengths present in the beam are eliminated or attenuated, using, for instance, energy filters (designed to select a desired X-ray energy range (bandwidth)) held in a filter wheel 160. These energy filters typically include an 'air' filter corresponding to no filter along with a set of low energy filters for filtering lower energy X-rays and high energy filters for filtering higher energy X-rays.

When the object 114 is exposed to the X-ray beam 103, the X-ray photons, which propagate through the sample 114, form the modulated beam 105 that is received by the detector subsystem 118. In some other examples, an objective lens is used to form an image onto the detector subsystem 118 of the microscopy system 200.

Typically, a magnified projection image of the object 114 is formed on the detector subsystem 118. The magnification of the X-ray stage is equal to the inverse ratio of the source-to-object distance 202 and the source-to-detector distance 204.

To achieve high resolution, an embodiment of the X-ray CT system 205 further utilizes a very high resolution detector 124-1 of the detector subsystem 118 in conjunction with positioning the sample 114 close to the X-ray source system 102. In one implementation of the high-resolution detector 124-1, a scintillator is used in conjunction with a microscope objective to provide additional optical magnification in a range between 2x and 100x, or more. The scintillator converts the X-rays into an optical image that can be detected by a camera.

Other detectors are often included as part of the detector subsystem 118. For example, the detector subsystem 118 can include a lower resolution detector 124-2. This could be a flat panel detector and camera or a detector with a lower magnification microscope objective, in examples. Configurations of one, two, or even more detectors 124 of the detector subsystem 118 are possible.

Preferably, two or more detectors 124-1, 124-2 are mounted on a turret 122 of the detector subsystem 118, so that they can be alternately rotated into the path of the modulated beam 105 from the sample 114.

In addition, the two or more detectors 124-1, 124-2 are preferably each spatially resolved detectors having at least 1000 by 1000 pixels in each of the two, X, Y axes.

Preferably, the source subsystem 102 and the detector subsystem 118 are mounted on respective z-axis stages. For example, in the illustrated example, the source subsystem 102 is mounted to the base 107 via a source stage 154, and the detector subsystem 118 is mounted to the base 107 via a detector stage 156. In practice, the source stage 154 and the detector stage 156 are lower precision, high travel-range stages that allow the source subsystem 102 and the detector subsystem 118 to be moved into position, often very close to the object during scanning and then be retracted to allow the object to be removed from, a new object to be loaded onto, and/or the object to be repositioned on the object holder 112 of the object stage subsystem 110.

The operation of the microscopy system 200 and the scanning of the object 114 is controlled by a computer 210 that often includes an image processor 220, a controller 222, and memory 224.

The computer 210 includes one or more processors 260 along with their data storage resources such as disc or solid-state drives, and dynamic memory, MEM. The processors 260 execute an operating system 262 and various applications run on that operating system 262 to allow for user control and operation of the microscopy system 200. Particularly, a scanning control application 252 executes on the operating system 262 to control XRM microscope 205 to perform scans of the sample 114. The resulting projections are then reconstructed into a volume representation of the sample 114 using a reconstruction application 250. Preferably, the reconstruction application 250 has the ability the perform the reconstruction when each of the projections in the scan have varying magnifications due to relative movement between the source subsystem 102, sample 114, and detector subsystem 118.

The controller 222 allows the computer 210 to control and manage components in the X-ray CT system 205 under software control. The controller might be a separate computer system adapted to handle real-time operations or an application program executing on the processor 260. For this purpose, the source subsystem 102 includes a control interface 130 allowing for its control and monitoring by the controller 222. Similarly, the object stage subsystem 110 and the detector subsystem 118 have respective control interfaces 132, 134 for allowing for their control and monitoring by the computer 210 via the controller 222.

To configure the microscopy system 200 to scan the sample and to adjust other parameters such as the geometrical magnification, the scanning control application 252 adjusts the source-to-object distance 202 and the source-to-detector distance 204 by respective operation of the source stage 154 and detector stage 156 to achieve the desired scanning setup.

Specifically, the source stage 154 and detector stage 156 include respective motor encoder systems and/or other actuator systems that allow the computer 210 via the controller 222 to position the respective X-ray source subsystem 102 and the detector subsystem 118 to specified positions via the control interfaces 130, 134. Further, the source stage 154 and detector stage 156 signal to the controller 222 their actual positions.

The scanning control application 252 then operates the object stage subsystem 110 to perform the CT scan via the controller 222 and the control interfaces 130, 132, 134. Typically, the object stage subsystem 110 will position the object by rotating the object about the Y-axis that is orthogonal to the optical axis (propagation direction) of the X-ray beam 103, 105 by controlling the theta stage 152 and/or position the sample in the x, y, z axes directions using the 3-axis (x, y, z) precision compound stage 150. The scanning control application 252 saves the scan 270 with projection data from the detector subsystem 118 along with the position of the X-ray source subsystem 102, the detector subsystem 118 and most importantly the positions of the x, y, z stages of the compound stage 150 and the position of the theta stage 152. This information is saved to the memory 224. In more detail, the scan data 270 include a record for each projection (Projection1, Projection2, ...) generated by the detector subsystem 118. In other words, the projections are sorted within the scan data 270. Each of those records includes a spatially resolved image and further includes associated metadata of the stages' positions. Thus, (Metadata1, Metadata2, ...) include the positions of the x, y, z stages of the compound stage 150 and the position of the theta stage 152 associated with each (Projection1, Projection2, ...). In other words, the scanning control application 252 is configured for controlling the scanning procedure and is further controlled for dithering the sample 114.

The scan data 270 also further include the acquisition parameters such as X-ray source voltage settings that help to determine the X-ray energy spectrum and exposure time and number of frames on the X-ray source subsystem 102. Other settings such as the field of view of the X-ray beam 103 incident upon the sample 114, the number of X-ray projection images to create for the sample 114, and the detector 124-1, 124-2 selected are also stored in the scan data 270. The acquisition parameters include X-ray source voltage, X-ray energy, X-ray source filtration, camera exposure time, number of frames, and overall number of projections. In addition, the source-to-object distance 202 and the source-to-detector distance 204 are stored.

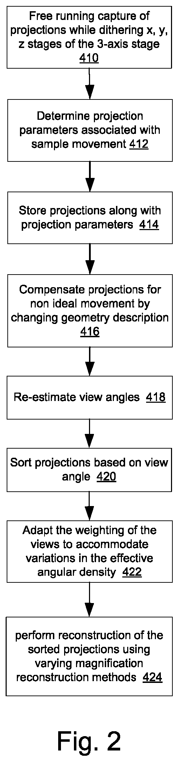

Fig. 2 is a flow diagram showing steps of a method for (actively) controlling the dithering of the sample 114 during a scan with the controller 222. Advantageously, the method serves to minimize deleterious effects of fixed defects such as aberrant detector pixels and fixed imperfections in the imaging path.

Referring still to Fig. 2, in step 410, the computer subsystem 210 executing the scanning control application 252 controls the X-ray microscope 205 to continuously move the sample 114 while dithering the sample 114 perpendicular to the propagation direction of the X-ray beam 103, 105 between the source subsystem 102 and the detector subsystem 118. The projections of the sample 114 are captured using the detector subsystem 118 based on a trigger generated by the computer subsystem 210. In one example, the detector subsystem 118 operates in a free-running mode (free-running detection, free-running capture) instantiating each projection record based on the trigger. Particularly, a continuous motion tomography X-ray microscope 205 is preferably employed in which the sample 114 is in constant motion. That is, instead of stopping at discrete angles, the sample 114 continuously rotates during the continuous motion tomography imaging process. The advantages of this approach are faster scanning, higher resolution and fewer motion artefacts due to averaged-out random fluctuations.

Further referring to the embodiment of Fig. 2, and concurrent with the process described above (i.e., at the same time and/or during the continuous scan), the sample 114 is moved, i.e., dithered in space, by control of the x-stage 150X and the z-stage 150Z of the x, y, z compound stage 150 perpendicular to the propagation direction of the X-ray beam 103, 105. The amount of dither is important. Preferably, the sample 114 is dithered to move the projection of the sample 114 on the selected detector, either detector 124-1, 124-2, by at least 5 pixels in either of the two axes of the X, Y axes. The dithering is often larger, such as about 20 pixels, but is typically less than 100 pixels since the dithering changes the system's 200 effective field of view. Preferably, a dither parameter is chosen to be 1.5 to 2.0 times larger than a largest imperfection in the sample 114. Said imperfections may include crystal lattice defects, high-density inclusions (e.g., inclusions with high atomic number), air voids/cracks, and/or regions with high roughness that lead to artificial edge enhancements.

This movement (dithering) reduces effects of any aberrant detector pixels and/or fixed imperfections in the imaging path since the defects will no longer trace a cylindrical path, which would create noticeable artifacts in the subsequent tomographic reconstruction.

In step 412, the stage positions for the middle of each exposure are interpolated from recorded periodic sampling of each axis position of the y-stage 150Y, x-stage 150X and the z-stage 150Z of the x, y, z compound stage 150 and the theta stage 152 over time and stored as metadata associated with the corresponding projections to then be subsequently used as the inputs for reconstruction.

In step 414, the projections are stored in scan data 270 along with the positions of the x, y, z stages of the compound stage 150 and the theta stage 152 as the associated metadata (projection parameters). Preferably, the projection parameters also include information related to a source vector 516, a view angle 512 and an angle between the detector normal and the z-axis 520.

Once the scan is complete, the reconstruction application 250 processes the scan data 270 to perform the reconstruction of the sample 114.

The reconstruction application 250 first calculates projection parameters associated with the sample's 114 dithering movement including non-ideal movement of the sample 114 toward and away from the detector 118 based on the exact and/or average position at the time of the exposure/trigger.

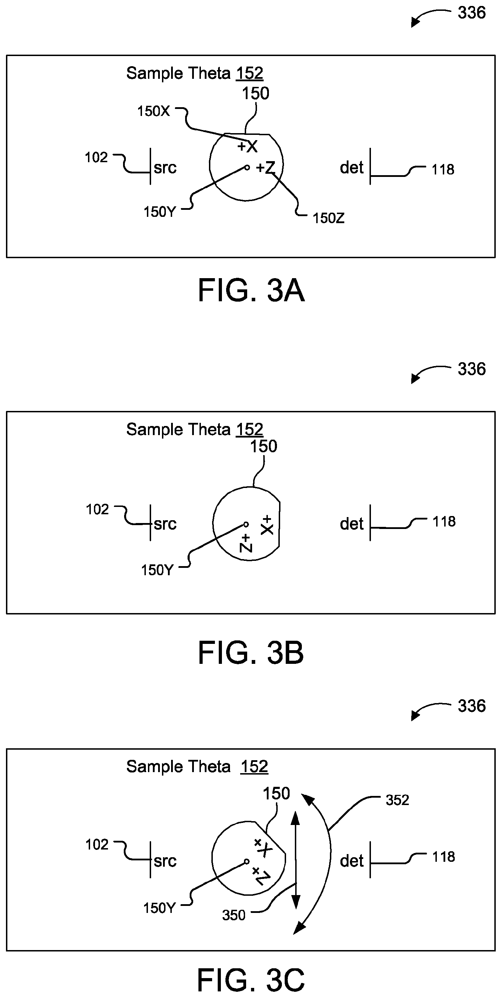

Figs. 3A, 3B, and 3C illustrate examples of non-ideal movement of the sample 114.

The dithering is effected (carried out) by the control of the y-stage 150Y, x-stage 150X and the z-stage 150Z of the x, y, z compound stage 150. The y-stage 150Y remains perpendicular to the propagation direction between the source subsystem 102 and the detector subsystem 118. However, due to the instantaneous angle of the theta stage 152, different control of the x-stage 150X and the z-stage 150Z is required in order to dither the sample perpendicular to the line between the source subsystem 102 and the detector subsystem 118. In other words, the theta stage 152 may be at an angle such that the x-stage 150X and the z-stage 150Z have to both be modulated concurrently in order to keep the sample's 114 movement perpendicular to the propagation direction of the beam. As such, non-ideal movement may be necessarily introduced by the (active) dithering or it may be the result of an incidental movement, which is not exactly perpendicular to the propagation direction of the beam.

As shown in Figs. 3A and 3B, dithering is accomplished by control of the y-stage 150Y along with the x-stage 150X or the z-stage 150Z. These are degenerate examples, however. In Fig. 3A, dithering is effected (carried out) by control of the y-stage 150Y and the x-stage 150X. In Fig. 3B, dithering is effected (carried out) by control of the y-stage 150Y and the z-stage 150Z.In other words, in the embodiments of Figs. 3A and 3B, the dithering does not require movement of the sample 114 along three directions, because the dithering can be carried out by solely modulating the sample's 114 position in the y-axis with the y-stage 150Y in combination with either only the x-axis (through the x-stage 150X) or only the z-axis (through the z-stage 150Z). This is because, in the exemplary embodiment of Fig. 3A, the z-axis is on the same plane as the propagation direction of the beam 103, 105 between the source 102 and the detector 118. Analogously, in the exemplary embodiment of Fig. 3B, the x-axis is on the same plane as the propagation direction of the beam 103, 105 between the source 102 and the detector 118.

In contrast, for most angles of the theta stage 152, a combination of x-stage 150X and the z-stage 150Z movement is required to dither perpendicular to the beam 103, 105 along the fixed x-axis of system (see coordinates of the system 10 in Fig. 1). The dithering thus additionally results in non-ideal movement of the sample 114 toward and away from the detector subsystem 118. This changes the effective magnification of each associated projection.

As shown in Fig. 3C, the center of the stage 150 is no longer aligned for movement only along movement arrow 350. Dithering now requires the combined movement of y-stage 150Y, x-stage 150X and the z-stage 150Z of the x, y, z compound stage 150, resulting in some non-ideal movement toward or away from the detector 118. Ultimately, the trajectory typically ends up being more of a movement arc 352 because the sample 114 rotation causes the projections to be acquired along an arc thereby not having an exactly optimal geometry for standard reconstruction techniques.

Returning to Fig. 2, the scan data 270 including the projections and the associated metadata are then further updated with the effective magnification (due to the non-ideal movements of the sample 114) according to further aspects of step 414. This information is further stored in the metadata associated with each projection.

In step 416, the effects of non-ideal movement are compensated for in the scan data and particularly in each projection by changing the geometry description of each of the projections. In more detail, the view geometry is described in the sample coordinate system. That is, for each view, the X-ray source, detector origin and two detector orientation vectors using a 3-component vector (x, y, z coordinates in the sample coordinate system) are specified, which are computed from the acquisition parameters such as positions of y-stage 150Y, x-stage 150X and the z-stage 150Z of the x, y, z compound stage 150, readings of the theta stage 152. The reconstruction takes in this geometry description for each projection and performs the reconstruction compensating for the geometry of the different projections including different magnifications.

In step 418, the view angles of the projections are re-estimated in step 418.

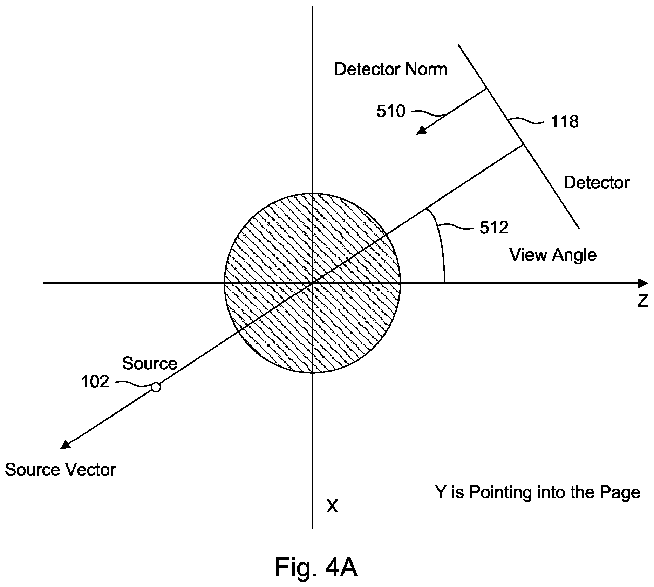

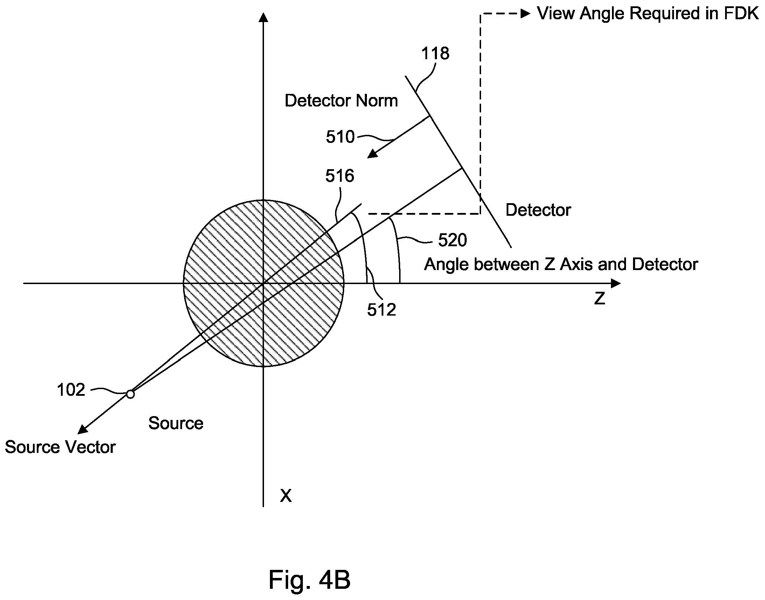

As shown in Figs. 4A and 4B, which are in the sample coordinate system that is motionless, that is, as the source 102 and detector 118 rotate and move from view to view, the view angle 512 also changes with dithering. These figures show the changes in the view angle 512 with dithering along the x-axis by the x-stage 150X.

Typically, the view angles are estimated based on source 102 position (not detector 118 normal) because if the sample moves around, the angles between detector normal 510 and x-axis will not change.

As shown in Fig. 4A, when there is no dithering, we can use either the source vector 516 or the detector normal 510 to estimate the view angle 512 with respect to the scanned sample.

However, when there is dithering, that is moving the scan sample around for each view, then the view angle 512 with respect to the scan sample has to be estimated using the source vector 516 (Fig. 4B). As shown in Fig. 4B, the angle 520 between the detector normal 510 and the z-axis will not change when dithering the sample 114 (translating the sample 114). The angle 512 between the source vector 516 and the z-axis will change when the sample 114 is moved around. This is the view angle 512 with respect to the sample 114 that should be used for reconstruction.

In step 420, the projections (Projection1, Projection2, ...) are sorted according to view angle 512 stored in the metadata. Sorting in this way instead of, for example, according to acquisition order has advantages for easier data accessibility and sorting for reconstruction.

The weighting of the views (view angles 512) is then adapted to accommodate variations in the effective angular density in step 422. Each projection's contribution to the reconstructed volume is multiplied by a factor which is smaller for projections taken at a higher angular density. In detail, the contribution of one projection to the reconstruction volume is proportional to the acquisition angle differences to its two neighboring projections. Angular density relates to the number of projections taken per degree of rotation. For example, when imaging flat samples, often more projections are captured at the lower angles between the major axis of the sample and the optical axis. In other words, collecting the data at some angles results in more data points than at other angles, and one may define an "effective angular density" to describe the density of this information per angle. In other words, the view angles 512 may be adaptively weighted to accommodate variations in the effective angular density of the projections. The advantage of applying this method is to avoid an overrepresentation/underrepresentation of certain angles in the reconstruction procedure.

Finally, the reconstruction of the sorted projections is performed using varying magnification reconstruction methods (at least one varying magnification reconstruction method) to compensate for the slightly changed geometric magnification due to the 3D dithering. See, e.g., Variable Zoom technique for X-Ray Computed Tomography, by Nikishkov, et al., NDT & E International, Volume 116, December 2020, 102310. Without this compensation, there will be reconstruction artifacts like streaks that will interfere with post image processing such as segmentation, and feature recognition. In addition, without compensating, dimension measurements will be inaccurate thus excluding applications like metrology.

While this invention has been particularly shown and described with references to preferred embodiments thereof, it will be understood by those skilled in the art that various changes in form and details may be made therein without departing from the scope of the disclosure encompassed by the appended claims.

### List of reference signs

- **10**: **Frame of reference (coordinate system)**
- **102**: **X-ray source subsystem (source)**
- **103**: **X-ray beam**
- **105**: **Modulated beam**
- **107**: **Base**
- **110**: **Object stage subsystem**
- **112**: **Object holder**
- **114**: **Sample (object)**
- **118**: **Detector subsystem (detector)**
- **122**: **Turret**
- **124-1**: **High resolution detector**
- **124-2**: **Lower resolution detector**
- **130**: **Control interface**
- **132**: **Object stage subsystem control interface**
- **134**: **Detector subsystem control interface**
- **150**: **3-axis compound stage**
- **150X**: **X-stage**
- **150Y**: **Y-stage**
- **150Z**: **Z-stage**
- **152**: **Theta stage**
- **154**: **Source stage**
- **156**: **Detector stage**
- **160**: **Filter wheel**
- **200**: **X-ray microscopy system**
- **202**: **Source-to-object distance**
- **204**: **Source-to-detector distance**
- **205**: **X-ray microscope (X-ray CT system)**
- **210**: **Computer**
- **220**: **Image processor**
- **222**: **Controller**
- **224**: **Memory**
- **250**: **Reconstruction application**
- **252**: **Scanning control application**
- **260**: **Processor**
- **262**: **Operating system**
- **270**: **Scan data**
- **350**: **Movement arrow**
- **352**: **Movement arc**
- **510**: **Detector normal**
- **512**: **View angle**
- **516**: **Source vector**
- **520**: **Angle between detector normal and z-axis**

## Claims

1. A method for scanning a sample (114) in an X-ray microscopy system (200) to minimize effects of imperfections in the sample (114) on image reconstruction, the method comprising:
moving the sample (114) along a direction perpendicular to a propagation direction of an X-ray beam (103, 105) between a source (102) and a detector (118) of the X-ray microscopy system (200);
capturing projections of the sample (114) with the detector (118) while the sample (114) is being moved;
obtaining projection parameters associated with the moving of the sample (114);
storing the projections along with the projection parameters; and
performing the image reconstruction of the projections using the obtained projection
parameters.

2. The method of claim 1, wherein the sample (114) is continuously moved along a direction perpendicular to a propagation direction of an X-ray beam (103, 105) while using a free running detection based on a trigger.

3. The method of any of claims 1 or 2, further comprising:
continuously rotating the sample (114) about an axis perpendicular to a top surface of an object stage subsystem (110) of the X-ray microscopy system (200);
wherein:
the rotating is performed by a theta stage (152);
the moving is performed by a 3-axis compound stage (150); and
the object stage subsystem (110) comprises both the theta stage (152) and the 3-axis compound stage (150).

4. The method of claim 3, wherein the projection parameters comprise positions of the 3-axis compound stage (150) and the theta stage (152) at the time of the trigger.

5. The method of claim 1 to 4, wherein the projection parameters comprise: a view angle (512), a magnification, an angle (520) between a detector normal and a z-axis of the X-ray microscopy system (200), and/or a source vector (516).

6. The method of any one of claims 1 to 5, further comprising re-estimating view angles and sorting the projections within scan data (270) according to the view angles .

7. The method of any one of claims 1 to 6, the method further comprising:
compensating the projections for a non-ideal movement of the sample (114) upon moving the sample (114) along a direction perpendicular to a propagation direction of an X-ray beam (103, 105) by changing a geometric description;
performing the image reconstruction by applying a varying magnification reconstruction method to compensate for the changed geometric description.

8. The method of claim 7, wherein the non-ideal movement comprises a movement of the sample (114) towards or away from the detector (118) upon moving the sample (114) along a direction perpendicular to a propagation direction of an X-ray beam (103, 105).

9. The method of any one of claims 1 to 8, wherein the projection parameters comprise view angles and performing the image reconstruction further comprises adaptively weighting the view angles (512) to accommodate variations in an effective angular density of the projections

10. The method of any one of claims 1 to 9, wherein the sample (114) is moved by controlling an x-stage (150X) and a z-stage (150Z) and a y-stage (150Y) for dithering in a direction perpendicular to the propagation direction of the X-ray beam (103, 105).

11. An X-ray microscopy, XRM, system (200), comprising an X-ray microscope (205) and a computer (210), wherein the X-ray microscope (205) includes an X-ray source subsystem (102), an object stage subsystem (110), and a detector subsystem (118), wherein the computer (210) is configured for executing a scanning control application (252) and a reconstruction application (25) for carrying out the method described in any one of claims 1 to 10.
